# EUROPEAN PATENT APPLICATION

(11) **EP 3 239 511 A1**
(43) Date of publication of application: **01.11.2017**
(21) Application number: 17167501.0
(22) Date of filing: 21.04.2017
(51) Int. Cl.: F02K 3/065, F02K 3/075, F01D 5/02, F02C 3/13, F02K 3/077, F02K 1/38

(54) **TURBOFAN ASSEMBLY AND METHOD OF ASSEMBLING**

(30) Priority: 27.04.2016 US 201615140079
(71) Applicant: General Electric Company, Schenectady, NY 12345 (US)
(72) Inventor: LARICCHIUTA, Mark John, Cincinnati, OH Ohio 45215 (US); MONIZ, Thomas Ory, Cincinnati, OH Ohio 45215 (US)
(74) Representative: Williams, Andrew Richard

(57) **Abstract**

A turbofan assembly (10) that includes a primary turbine section (12) and an aft fan section (100) positioned downstream from the primary turbine section (12). The primary turbine section (12) includes a bypass duct (32) configured to channel a stream (102) of bypass air therethrough, and a main flow duct (34) configured to discharge a stream (104) of exhaust gas therefrom. The bypass duct (32) and the main flow duct (34) each include a discharge end (106, 108) positioned such that a mixed stream (110) of bypass air and exhaust gas is discharged from the primary turbine section (12). The aft fan section (100) includes at least one turbine and fan stage (112) including a turbine portion (114) and a fan portion (116) coupled to the turbine portion (114). The turbine portion (114) is positioned to receive the mixed stream (110) of bypass air and exhaust gas, and the fan portion (116) is positioned radially outward from the turbine portion (114).

## Description

### BACKGROUND

The present disclosure relates generally to turbine engines and, more specifically, to a turbofan assembly formed with an integral aft fan module section.

At least some known gas turbine engines, such as turbofans, include a fan, a core engine, and a low-pressure turbine. The core engine includes at least one compressor, a combustor, and a high-pressure turbine coupled together in a serial flow relationship. More specifically, the compressor and high-pressure turbine are coupled through a shaft to form a high-pressure rotor assembly. Air entering the core engine is mixed with fuel and ignited to form a high energy gas stream. The high energy gas stream flows through the high-pressure turbine to rotatably drive the high-pressure turbine such that the shaft rotatably drives the compressor. After being discharged from the high-pressure turbine, the gas stream continues to expand as it flows through a low-pressure turbine positioned aft of the high-pressure turbine. The low-pressure turbine includes a rotor assembly coupled to a drive shaft and a fan. The low-pressure turbine rotatably drives the fan through the drive shaft.

Known turbofan engines are generally characterized by their bypass ratio (i.e., the ratio of mass flow of air that bypasses the core engine relative to the mass flow of air channeled into the core engine). For example, turbofan engines having a zero bypass ratio are generally classified as turbojet engines, turbofan engines having a bypass ratio less than about 2 to 1 are generally classified as low bypass turbofan engines, and turbofan engines having a bypass ratio greater than about 2 to 1 are generally classified as high bypass turbofan engines. Low bypass turbofan engines are typically capable of supersonic flight. However, low bypass turbofan engines are comparatively fuel-inefficient and produce more noise relative to high bypass turbofan engines typically used with commercial aircraft.

### BRIEF DESCRIPTION

In one aspect, a turbofan assembly is provided. The assembly includes a primary turbine section and an aft fan section positioned downstream from the primary turbine section. The primary turbine section includes a bypass duct configured to channel a stream of bypass air therethrough, and a main flow duct configured to discharge a stream of exhaust gas therefrom. The bypass duct and the main flow duct each include a discharge end positioned such that a mixed stream of bypass air and exhaust gas is discharged from the primary turbine section. The aft fan section includes at least one turbine and fan stage including a turbine portion and a fan portion coupled to the turbine section. The turbine portion is positioned to receive the mixed stream of bypass air and exhaust gas, and the fan portion is positioned radially outward from the turbine portion.

In another aspect, an aft fan module for use in a turbofan assembly is provided. The aft fan module includes a nacelle housing extension, a nacelle housing positioned about the nacelle housing extension, and at least one turbine and fan stage. The turbine and fan stage includes a turbine portion and a fan portion coupled to the turbine portion. The turbine portion is positioned radially inward from the nacelle housing extension, and the fan portion is positioned between the nacelle housing extension and the nacelle housing.

In yet another aspect, a method of assembling a turbofan assembly is provided. The method includes positioning an aft fan section downstream from a primary turbine section. The aft fan section includes at least one turbine and fan stage including a turbine portion and a fan portion. The primary turbine section includes a bypass duct configured to channel a stream of bypass air therethrough, and a main flow duct configured to discharge a stream of exhaust gas therefrom. The method further includes positioning discharge ends of the bypass duct and the main flow duct such that a mixed stream of bypass air and exhaust gas is discharged from the primary turbine section, and orienting the aft fan section such that the turbine portion is positioned to receive the mixed stream of bypass air and exhaust gas, and such that the fan portion is positioned radially outward from the turbine portion.

### DRAWINGS

These and other features, aspects, and advantages of the present disclosure will become better understood when the following detailed description is read with reference to the accompanying drawings in which like characters represent like parts throughout the drawings, wherein:
FIG. 1 is an illustration of an exemplary turbofan assembly; and
FIG. 2 is an enlarged schematic illustration of an exemplary aft fan module that may be used with the turbofan assembly shown in FIG. 1.

Unless otherwise indicated, the drawings provided herein are meant to illustrate features of embodiments of the disclosure. These features are believed to be applicable in a wide variety of systems comprising one or more embodiments of the disclosure. As such, the drawings are not meant to include all conventional features known by those of ordinary skill in the art to be required for the practice of the embodiments disclosed herein.

### DETAILED DESCRIPTION

In the following specification and the claims, reference will be made to a number of terms, which shall be defined to have the following meanings.

The singular forms "a", "an", and "the" include plural references unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value. Here and throughout the specification and claims, range limitations may be combined and/or interchanged. Such ranges are identified and include all the sub-ranges contained therein unless context or language indicates otherwise.

As used herein, the terms "axial" and "axially" refer to directions and orientations that extend substantially parallel to a centerline of the turbine engine. Moreover, the terms "radial" and "radially" refer to directions and orientations that extend substantially perpendicular to the centerline of the turbine engine. In addition, as used herein, the terms "circumferential" and "circumferentially" refer to directions and orientations that extend arcuately about the centerline of the turbine engine.

Embodiments of the present disclosure relate to a turbofan assembly formed with an integral aft fan module section. More specifically, the turbofan assembly described herein is formed from a primary turbine section and an aft fan module section positioned downstream from the primary turbine section. The primary turbine section is a standard low bypass turbofan engine including a bypass duct that channels a stream of bypass air therethrough, and a main flow duct discharges combustion exhaust gas therefrom. However, rather than being discharged from the primary turbine section for propulsion purposes, the bypass air and the exhaust gas is mixed and channeled towards the aft fan module section. The aft fan module section includes at least one turbine and fan stage including a radially inner turbine portion and a radially outer fan portion. The radially inner turbine portion is positioned to receive the mixed stream of bypass air and exhaust gas, which drives the at least one turbine and fan stage. As such, the radially outer fan portion provides a propulsive air stream for improving the performance and efficiency of the primary turbine section, and for providing noise attenuation for the primary turbine section. Moreover, the aft fan module section is designed to retrofit existing low bypass turbofan engines.

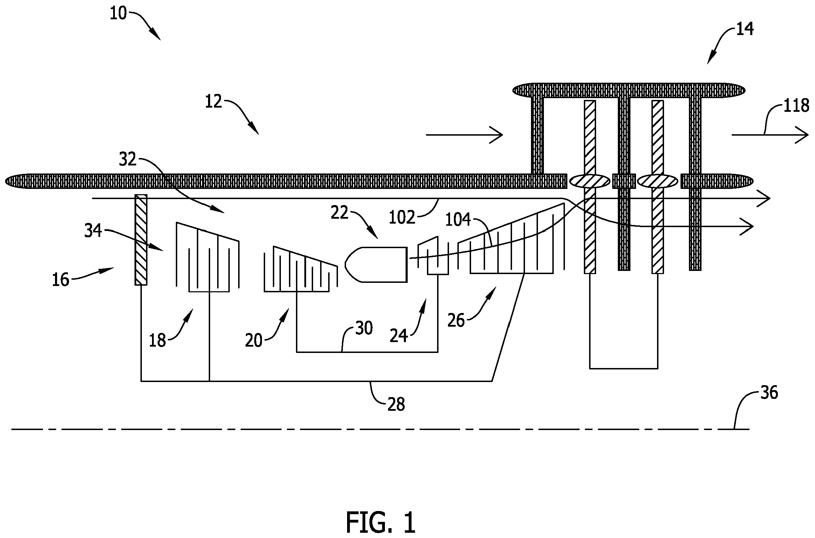

FIG. 1 is a schematic illustration of an exemplary turbofan assembly 10 including a primary turbine section 12 and an aft fan section 14. Primary turbine section 12 includes a fan assembly 16, a low pressure or booster compressor assembly 18, a high-pressure compressor assembly 20, and a combustor assembly 22. Fan assembly 16, booster compressor assembly 18, high-pressure compressor assembly 20, and combustor assembly 22 are coupled in serial flow communication. Primary turbine section 12 also includes a high-pressure turbine 24 coupled in flow communication with combustor assembly 22 and a low-pressure turbine 26. Low-pressure turbine 26 is coupled to fan assembly 16 and booster compressor assembly 18 through a first drive shaft 28, and high-pressure turbine 24 is coupled to high-pressure compressor assembly 20 through a second drive shaft 30. Primary turbine section 12 also includes a bypass duct 32 and a main flow duct 34. Inlets of bypass duct 32 and main flow duct 34 are sized such that primary turbine section 12 has a bypass ratio of less than about 2 to 1. Primary turbine section 12 further includes a centerline 36 about which fan assembly 16, booster compressor assembly 18, high-pressure compressor assembly 20, and turbines 20 and 22 rotate. In an alternative embodiment, primary turbine section 12 has any bypass ratio that enables turbofan assembly to function as described herein.

In operation, air entering primary turbine section 12 is channeled through fan assembly 16. A first portion of the air channeled through fan assembly 16 is channeled through bypass duct 32, and a second portion of the air is channeled through main flow duct 34 and towards booster compressor assembly 18. Compressed air is discharged from booster compressor assembly 18 towards high-pressure compressor assembly 20. Highly compressed air is channeled from high-pressure compressor assembly 20 towards combustor assembly 22, mixed with fuel, and the mixture is combusted within combustor assembly 22. High temperature combustion gas generated by combustor assembly 22 is channeled towards turbines 24 and 26. Combustion exhaust gas is subsequently discharged from main flow duct 34 of primary turbine section 12, as will be explained in more detail below.

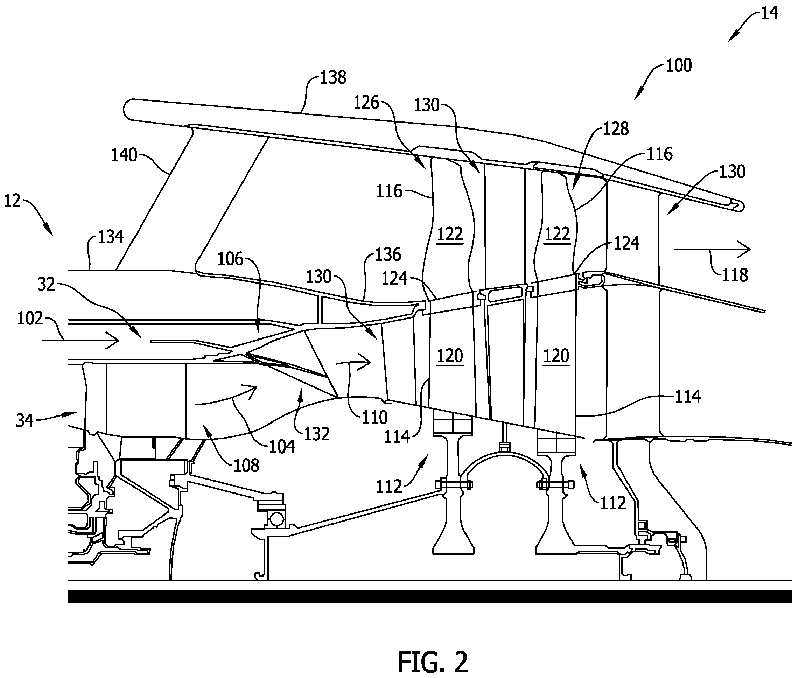

FIG. 2 is an enlarged schematic illustration of an exemplary aft fan module 100 that may be used with turbofan assembly 10 (shown in FIG. 1). More specifically, in one embodiment, aft fan module 100 is formed separately from and designed for retrofit onto a turbofan including primary turbine section 12 to define aft fan section 14 of turbofan assembly 10. As described above, primary turbine section 12 includes bypass duct 32 and main flow duct 34. Bypass duct 32 channels a stream 102 of bypass air therethrough, and main flow duct 34 discharges a stream 104 of exhaust gas therefrom.

In the exemplary embodiment, bypass duct 32 includes a discharge end 106, and main flow duct 34 includes a discharge end 108. Discharge ends 106 and 108 are positioned such that a mixed stream 110 of bypass air and exhaust gas is discharged from primary turbine section 12. More specifically, discharge end 106 is positioned such that stream 102 of bypass air, in its current form, is not exhausted from turbofan assembly 10.

In the exemplary embodiment, aft fan module 100 includes at least one turbine and fan stage 112 including a turbine portion 114 and a fan portion 116 coupled to turbine portion 114. More specifically, turbine portion 114 and fan portion 116 are integrally formed with each other as a single unitary structure. Turbine portion 114 is positioned to receive mixed stream 110 of bypass air and exhaust gas, and fan portion 116 is positioned radially outward from turbine portion 114. As such, turbine portion 114 drives turbine and fan stage 112, which enables fan portion 116 to discharge a stream 118 of propulsive air from aft fan module 100.

Turbine portion 114 includes a plurality of turbine blades 120, fan portion 116 includes a plurality of fan blades 122, and a mid-span shroud 124 is defined between turbine blades 120 and fan blades 122. Turbine blades 120 and fan blades 122 are shaped and sized such that mid-span shroud 124 is capable of withstanding opposing rotational forces induced by oppositely oriented chord sections (not shown) of turbine blades 120 and fan blades 122 during operation of turbofan assembly 10. More specifically, at least one parameter of fan blades 122 is adjusted to ensure fan blades 122 and turbine blades 120 have a comparable mechanical footprint. An exemplary parameter includes, but is not limited to, a chord thickness of fan blades 122. Moreover, fan blades 122 are designed for supersonic performance. For example, in one embodiment, fan blades 122 in the plurality of fan blades 122 have a forward aerodynamic sweep profile, which provides a performance and noise attenuation benefit for turbofan assembly 10.

In some embodiments, aft fan module 100 includes more than one turbine and fan stage 112 to increase the energy extraction capability of aft fan module 100. More specifically, as shown in FIG. 2, aft fan module 100 includes a first turbine and fan stage 126 and a second turbine and fan stage 128 positioned downstream from first turbine and fan stage 126. Each of first turbine and fan stage 126 and second turbine and fan stage 128 include turbine portion 114 and fan portion 116. Turbine portion 114 of first turbine and fan stage 126 is positioned to receive mixed stream 110 of bypass air and exhaust gas. Moreover, aft fan module 100 includes one or more guide vane assemblies 130 positioned fore and aft of first turbine and fan stage 126 and second turbine and fan stage 128. As such, mixed stream 110 of bypass air and exhaust gas is channeled through aft fan module 100 in an efficient manner. Guide vane assemblies 130 include radially inner guide vanes for straightening mixed stream 110, and radially outer guide vanes for straightening stream 118 of propulsive air. Guide vane assemblies 130 also include a mid-span shroud positioned between respective radially inner and radially outer portions thereof. The aft-most guide vane assembly 130 is also a structural frame that supports the at least one turbine and fan stage 112.

The at least one turbine and fan stage 112 is rotationally isolated from rotating components (e.g., fan assembly 16, booster compressor assembly 18, high-pressure compressor assembly 20, and turbines 24 and 26) of primary turbine section 12. Put another way, the at least one turbine and fan stage 112 of aft fan module 100 is rotationally uncoupled from and freely rotates relative to the rotating components of primary turbine section 12. As such, the energy extracted by turbine and fan stage 112 is not used to drive the rotating components of primary turbine section 12, which facilitates improving the performance of turbofan assembly 10.

As described above, mixed stream 110 is channeled from primary turbine section 12 towards aft fan module 100. In one embodiment, primary turbine section 12 includes a mixing device 132 positioned to receive stream 102 of bypass air and stream 104 of exhaust gas. Primary turbine section 12 includes any mixing device that enables turbofan assembly 10 to function as described herein. An exemplary mixing device includes, but is not limited to, a daisy mixer device. The daisy mixer device includes alternating circumferentially spaced flow passages (not shown) for channeling alternating streams of the bypass air and the exhaust gas therethrough. As such, mixing device 132 mixes the bypass air and the exhaust gas and discharges mixed stream 110 towards the at least one turbine and fan stage 112. Mixing the bypass air and the exhaust gas facilitates reducing a temperature gradient within mixed stream 110 before reaching turbine and fan stage 112.

In the exemplary embodiment, turbofan assembly 10 further includes a first nacelle housing 134 extending along primary turbine section 12. As described above, aft fan module 100 is formed separately from and designed for retrofit onto an existing turbofan including primary turbine section 12. Accordingly, aft fan module 100 further includes a nacelle housing extension 136 coupled to and extending rearward from first nacelle housing 134. Nacelle housing extension 136 increases a length of turbofan assembly 10, and provides additional space for turbofan assembly 10 to house turbine portions 114 of one or more turbine and fan stages 112.

Moreover, aft fan module 100 includes a second nacelle housing 138 positioned about at least a portion of first nacelle housing 134 and nacelle housing extension 136. First nacelle housing 134 is coupled to second nacelle housing 138 with a strut 140. In one embodiment, strut 140 is designed to provide pre-swirl to airflow channeled towards fan portions 116 of turbine and fan stages 112. In addition, second nacelle housing 138 is positioned, and turbine portions 114 and fan portions 116 are sized, such that each turbine portion 114 is positioned radially inward from nacelle housing extension 136, and such that each fan portion 116 is positioned between nacelle housing extension 136 and second nacelle housing 138. As such, predefined flow paths are defined for channeling mixed stream 110 past turbine portions 114, and for channeling airflow past fan portions 116.

As shown, second nacelle housing 13 forms an inlet for stream 118 of propulsive air, wherein the inlet is positioned substantially aft of the inlet for primary turbine section 12. Alternatively, the inlet for second nacelle housing 138 is positioned forward from the aft-most portion of primary turbine section 12. Moreover, alternatively, second nacelle housing 138 is part of an embedded aircraft installation.

An exemplary technical effect of the systems and methods described herein includes at least one of: (a) improving the performance and efficiency of supersonic turbofan engines; (b) improving acoustic performance of the turbofan assembly such that additional noise attenuation is provided for an aircraft in which the engine is attached; and (c) enabling retrofit of an existing supersonic turbofan engine to include an aft fan module.

Exemplary embodiments of a turbofan assembly and related components are described above in detail. The system is not limited to the specific embodiments described herein, but rather, components of systems and/or steps of the methods may be utilized independently and separately from other components and/or steps described herein. For example, the configuration of components described herein may also be used in combination with other processes, and is not limited to practice with only turbofan assemblies and related methods as described herein. Rather, the exemplary embodiment can be implemented and utilized in connection with many applications where improving turbine engine performance is desired.

Although specific features of various embodiments of the present disclosure may be shown in some drawings and not in others, this is for convenience only. In accordance with the principles of embodiments of the present disclosure, any feature of a drawing may be referenced and/or claimed in combination with any feature of any other drawing.

This written description uses examples to disclose the embodiments of the present disclosure, including the best mode, and also to enable any person skilled in the art to practice embodiments of the present disclosure, including making and using any devices or systems and performing any incorporated methods. The patentable scope of the embodiments described herein is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are disclosed in the following numbered clauses. Any features of any of the aspects and/or embodiments may be readily combined with one or more features of any other aspect or embodiment.
1. A turbofan assembly comprising:
   a primary turbine section comprising:
      a bypass duct configured to channel a stream of bypass air therethrough; and
      a main flow duct configured to discharge a stream of exhaust gas therefrom, wherein said bypass duct and said main flow duct each comprise a discharge end positioned such that a mixed stream of bypass air and exhaust gas is discharged from said primary turbine section; and
      an aft fan section positioned downstream from said primary turbine section, said aft fan section comprising:
         at least one turbine and fan stage comprising a turbine portion and a fan portion coupled to said turbine portion, said turbine portion positioned to receive the mixed stream of bypass air and exhaust gas, and said fan portion positioned radially outward from said turbine portion.
2. The turbofan assembly in accordance with clause 1, wherein said at least one turbine and fan stage is rotationally isolated from rotating components of said primary turbine section.
3. The turbofan assembly in accordance with clause 1 or 2, wherein said at least one turbine and fan stage comprises:
   a first turbine and fan stage, wherein said turbine portion of said first turbine and fan stage is positioned to receive the mixed stream of bypass air and exhaust gas; and
   a second turbine and fan stage positioned downstream from said first turbine and fan stage.
4. The turbofan assembly in accordance with any preceding clause, wherein said primary turbine section further comprises a mixing device positioned to receive the stream of bypass air and the stream of exhaust gas, and configured to discharge the mixed stream of bypass air and exhaust gas towards said at least one turbine and fan stage.
5. The turbofan assembly in accordance with any preceding clause, wherein said mixing device comprises a daisy mixer device.
6. The turbofan assembly in accordance with any preceding clause, further comprising:
   a first nacelle housing extending along said primary turbine section; and
   a nacelle housing extension coupled to and extending rearward from said first nacelle housing.
7. The turbofan assembly in accordance with any preceding clause, wherein said aft fan section further comprises a second nacelle housing positioned about said first nacelle housing and said nacelle housing extension such that said turbine portion is positioned radially inward from said nacelle housing extension, and such that said fan portion is positioned between said nacelle housing extension and said second nacelle housing.
8. The turbofan assembly in accordance with any preceding clause, wherein said turbine portion and said fan portion are integrally formed with each other.
9. The turbofan assembly in accordance with any preceding clause, wherein said primary turbine section comprises a bypass ratio of less than about 2 to 1.
10. An aft fan module for use in a turbofan assembly, said aft fan module comprising:
   a nacelle housing extension;
   a nacelle housing positioned about said nacelle housing extension; and
   at least one turbine and fan stage comprising a turbine portion and a fan portion coupled to said turbine portion, said turbine portion positioned radially inward from said nacelle housing extension, and said fan portion positioned between said nacelle housing extension and said nacelle housing.
11. The aft fan module in accordance with clause 10, wherein said at least one turbine and fan stage comprises:
   a first turbine and fan stage, wherein said turbine portion of said first turbine and fan stage is positioned to receive the mixed stream of bypass air and exhaust gas; and
   a second turbine and fan stage positioned downstream from said first turbine and fan stage.
12. The aft fan module in accordance with clause 10 or 11, wherein said turbine portion and said fan portion are integrally formed with each other.
13. The aft fan module in accordance with any of clauses 10 to 12, wherein said fan portion comprises a plurality of fan blades having a forward aerodynamic sweep profile.
14. A method of assembling a turbofan assembly, said method comprising:
   positioning an aft fan section downstream from a primary turbine section, wherein the aft fan section includes at least one turbine and fan stage including a turbine portion and a fan portion, and wherein the primary turbine section includes a bypass duct configured to channel a stream of bypass air therethrough, and a main flow duct configured to discharge a stream of exhaust gas therefrom;
   positioning discharge ends of the bypass duct and the main flow duct such that a mixed stream of bypass air and exhaust gas is discharged from the primary turbine section; and
   orienting the aft fan section such that the turbine portion is positioned to receive the mixed stream of bypass air and exhaust gas, and such that the fan portion is positioned radially outward from the turbine portion.
15. The method in accordance with clause 14, further comprising rotationally isolating the at least one turbine and fan stage from rotating components of the primary turbine section.
16. The method in accordance with clause 14 or 15 further comprising positioning a mixing device to receive the stream of bypass air and the stream of exhaust gas, the mixing device configured to discharge the mixed stream of bypass air and exhaust gas towards the at least one turbine and fan stage.
17. The method in accordance with any of clauses 14 to 16, wherein positioning an aft fan section comprises coupling an aft fan module to the primary turbine section.
18. The method in accordance with any of clauses 14 to 17, wherein the primary turbine section further includes a first nacelle housing extending along the primary turbine section, wherein coupling an aft fan module further comprises:
   coupling a nacelle housing extension to the first nacelle housing, the nacelle housing extension extending rearward from the first nacelle housing.
19. The method in accordance with any of clauses 14 to 18, further comprising positioning a second nacelle housing about the first nacelle housing and the nacelle housing extension such that the turbine portion is positioned radially inward from the nacelle housing extension, and such that the fan portion is positioned between the nacelle housing extension and the second nacelle housing.
20. The method in accordance with any of clauses 14 to 19 further comprising integrally forming the turbine portion and the fan portion with each other.

## Claims

1. A turbofan assembly (10) comprising:
a primary turbine section (12) comprising:
a bypass duct (32) configured to channel a stream (102) of bypass air therethrough; and
a main flow duct (34) configured to discharge a stream (104) of exhaust gas therefrom, wherein said bypass duct (32) and said main flow duct (34) each comprise a discharge end (106, 108) positioned such that a mixed stream (110) of bypass air and exhaust gas is discharged from said primary turbine section (12); and
an aft fan section (100) positioned downstream from said primary turbine section (12), said aft fan section (100) comprising:
at least one turbine and fan stage (112) comprising a turbine portion (114) and a fan portion (116) coupled to said turbine portion (114), said turbine portion (114) positioned to receive the mixed stream (110) of bypass air and exhaust gas, and said fan portion (116) positioned radially outward from said turbine portion (114).

2. The turbofan assembly (10) in accordance with Claim 1, wherein said at least one turbine and fan stage (112) is rotationally isolated from rotating components of said primary turbine section (12).

3. The turbofan assembly (10) in accordance with Claim 1 or 2, wherein said at least one turbine and fan stage (112) comprises:
a first turbine and fan stage (126), wherein said turbine portion (114) of said first turbine and fan stage (126) is positioned to receive the mixed stream (110) of bypass air and exhaust gas; and
a second turbine and fan stage (128) positioned downstream from said first turbine and fan stage (126).

4. The turbofan assembly (10) in accordance with any preceding Claim, wherein said primary turbine section (12) further comprises a mixing device (132) positioned to receive the stream (102) of bypass air and the stream (104) of exhaust gas, and configured to discharge the mixed stream (110) of bypass air and exhaust gas towards said at least one turbine and fan stage (112).

5. The turbofan assembly (10) in accordance with Claim 4, wherein said mixing device (132) comprises a daisy mixer device.

6. The turbofan assembly (10) in accordance with any preceding Claim, further comprising:
a first nacelle housing (134) extending along said primary turbine section (12); and
a nacelle housing extension (136) coupled to and extending rearward from said first nacelle housing (134).

7. The turbofan assembly (10) in accordance with Claim 6, wherein said aft fan section (100) further comprises a second nacelle housing (138) positioned about said first nacelle housing (134) and said nacelle housing extension (136) such that said turbine portion (114) is positioned radially inward from said nacelle housing extension (136), and such that said fan portion (116) is positioned between said nacelle housing extension (136) and said second nacelle housing (138).

8. The turbofan assembly (10) in accordance with any preceding Claim, wherein said turbine portion (114) and said fan portion (116) are integrally formed with each other.

9. The turbofan assembly (10) in accordance with any preceding Claim, wherein said primary turbine section (12) comprises a bypass ratio of less than about 2 to 1.

10. An aft fan module for use in a turbofan assembly (10), said aft fan module comprising:
a nacelle housing extension (136);
a nacelle housing (138) positioned about said nacelle housing extension (136); and
at least one turbine and fan stage (112) comprising a turbine portion (114) and a fan portion (116) coupled to said turbine portion (114), said turbine portion (114) positioned radially inward from said nacelle housing extension (136), and said fan portion (116) positioned between said nacelle housing extension (136) and said nacelle housing.

11. The aft fan module in accordance with Claim 10, wherein said at least one turbine and fan stage (112) comprises:
a first turbine and fan stage (126), wherein said turbine portion (114) of said first turbine and fan stage (126) is positioned to receive the mixed stream (110) of bypass air and exhaust gas; and
a second turbine and fan stage (128) positioned downstream from said first turbine and fan stage (126).

12. The aft fan module in accordance with Claim 10 or 11, wherein said turbine portion (114) and said fan portion (116) are integrally formed with each other.

13. The aft fan module in accordance with any of Claims 10 to 12, wherein said fan portion (116) comprises a plurality of fan blades (122) having a forward aerodynamic sweep profile.

14. The aft fan module in accordance with any of Claims 10 to 13, wherein said at least one turbine and fan stage (112) is rotationally isolated from rotating components of a primary turbine section (12).

15. A method of assembling a turbofan assembly, said method comprising:
positioning an aft fan section downstream from a primary turbine section (12), wherein the aft fan section includes at least one turbine and fan stage including a turbine portion (114) and a fan portion (116), and wherein the primary turbine section includes a bypass duct configured to channel a stream of bypass air therethrough, and a main flow duct configured to discharge a stream of exhaust gas therefrom;
positioning discharge ends of the bypass duct (32) and the main flow duct (34) such that a mixed stream of bypass air and exhaust gas is discharged from the primary turbine section (12); and
orienting the aft fan section such that the turbine portion (114) is positioned to receive the mixed stream of bypass air and exhaust gas, and such that the fan portion (116) is positioned radially outward from the turbine portion.
